# EUROPEAN PATENT SPECIFICATION

(11) **EP 3 818 486 B1**
(45) Date of publication and mention of the grant of the patent: **19.03.2025**
(21) Application number: 19735228.9
(22) Date of filing: 19.06.2019
(51) Int. Cl.: G06Q 20/40

(54) **REGAINING AN ORIGINAL CARD SECURITY CODE USED IN A CARD BASED TRANSACTION**
WIEDERGEWINNEN EINES URSPRÜNGLICHEN KARTENSICHERUNGSCODES, DER IN EINER KARTENBASIERTEN TRANSAKTION VERWENDET WIRD
RÉCUPÉRATION D'UN CODE DE SÉCURITÉ DE CARTE D'ORIGINE UTILISÉ DANS UNE TRANSACTION BASÉE SUR UNE CARTE

(30) Priority: 06.07.2018 SE 1850858
(43) Date of publication of application: 12.05.2021
(73) Proprietor: No Common Payment AB, 111 83 Stockholm (SE)
(72) Inventor: CARLEMALM, Fredrik, 114 32 Stockholm (SE)
(74) Representative: Ström & Gulliksson AB
(86) International application number: PCT/EP2019/066274
(87) International publication number: WO 2020/007618

(56) References cited:
- WO-A1-2018/044221
- US-A1- 2011 270 757
- US-A1- 2012 143 754
- US-B1- 9 033 218

## Description

### RELATED PATENT APPLICATIONS

This patent application is related to the Swedish patent application no. SE1651165-1, which was filed on August 30, 2016.

This patent application is also related to the international PCT patent application no. PCT/SE2017/050858, which was filed on August 24, 2017.

### TECHNICAL FIELD

The present disclosure generally relates to the field of card based transactions. In more detail, the present disclosure relates to a further development of the technology that is disclosed in SE1651165-1 and PCT/SE2017/050858.

More specifically, the embodiments described herein relate to methods and server systems (e.g., including one or more computer servers) for regaining the original CSC from a temporary CSC, e.g. used in a card based transaction. The original CSC may, for example, be a Card Verification Value (CVV), a CVV2, a Card Verification Code (CVC), a CVC2, a Card Validation Number (CVN), a CVN2, or a Card Identification Number (CID).

### BACKGROUND

The banking industry has developed a type of "password" for use with cards such as credit cards and debit cards. This password typically takes the form of an authentication code (sometimes referred to as CSC) and is commonly referred to in the industry as a "card verification value" or "CVV". The CVV is formatted and used according to accepted industry standards. Initially, the CVV was an extra numeric string encoded on the magnetic stripe of credit and debit cards.

More recently, an additional three-digit code has been printed on the backs, or rear side, of credit and debit cards. This printed code is commonly referred within the banking industry to as a "CVV2" code and the magnetically stored code is commonly referred to as a "CVV1" code. The printed code can, e.g., be requested and verified by merchants in transactions where the merchant has no other way of actually verifying that the customer has possession of the physical card.

For example, in mobile transactions or in on-line transactions, the consumer may be prompted to enter the CVV2 code from the back of his or her card. The CVV2 code may provide some assurance that the consumer has possession of the physical credit or debit card, and has not simply obtained the card number and expiration date fraudulently. A printed CVV code is sometimes also referred to by consumers and on-line vendors as a "3-digit security code", "security code" or as "check digits".

SE1651165-1 *inter alia* describes a method of generating a temporary CSC performed by a mobile terminal (e.g., a mobile telephone). The method is suitably for use in a card based transaction with a server system having one or several computer servers. According to certain embodiments of SE1651165-1, the proposed method includes: obtaining a CSC from a card, such as a credit card or a debit card; obtaining a data seed, the data seed including a mobile terminal identifier and a time stamp; and generating, or otherwise calculating, a total sum of the data seed and the CSC and, thereafter, applying a minimal perfect hash function to the thus generated total sum to generate the temporary CSC.

Document WO 2018/044221A1 describes a method for generating a temporary CSC for use in a card based transaction.

### SUMMARY

This disclosure recognizes that some existing solutions for card based transactions, and particularly mobile and on-line transactions, may still be inadequate. It is therefore a general object of the embodiments described herein to further develop the technology that is known in the existing art.

It is therefore in view of the above background that the various embodiments disclosed herein have been made.

It is a general object of the embodiments described herein to allow for a further development of card-based transactions that offer prevention, or at least complication, of unauthorized use of cards (e.g., credit or debit cards) by limiting access to accounts associated with said cards to unauthorized entities, processes and/or individuals.

This general object has been addressed by the appended independent claims. Advantageous embodiments are defined in the appended dependent claims.

In a first of its aspects, this disclosure concerns a method of regaining an original Card Security Code (CSC) from a temporary CSC used in a card based transaction. The method comprises obtaining a temporary CSC, wherein the temporary CSC has been generated by previously applying a minimal perfect hash function to the CSC as well as a first data seed; obtaining or otherwise producing a second data seed; and applying a same minimal perfect hash function to the obtained second data seed together with each one of several CSCs from a stored list of available CSCs until a match is found between the obtained temporary CSC and one CSC from the stored list of available CSCs, thereby regaining the original CSC.

The second data seed is a same data seed as the first data seed. In other words, the first data seed can be said to equal the second data seed. That is, the second data seed is typically the same data seed that was used during the preceding generation of the temporary CSC.

In some embodiments, the method may be performed by a server system comprising one or several computers, or computer servers. For example, in some embodiments the method may be performed by any one or a combination of i) a service provider system having one or several computer servers and ii) a credit issuer system having one or several computer servers.

Advantageously, but not necessarily, the temporary CSC may have been generated by previously applying a minimal perfect hash function to an original CSC as well as a data seed in accordance with the teachings of SE1651165-1 (or, PCT/SE2017/050858), see also the Background section hereinabove.

As will be appreciated, the method may additionally comprise, in response to a match having been found, continuing an initiated card based transaction.

In advantageous embodiments, the first data seed includes a mobile terminal identifier and a time stamp. As will be appreciated, the second data seed may therefore also include a corresponding mobile terminal identifier and a corresponding time stamp. Accordingly, the second data seed may include the same mobile terminal identifier and the same time stamp as the first data seed.

In some embodiments, obtaining the temporary CSC may comprise receiving a signal from a remote device or a remote server system, wherein the signal comprises the temporary CSC. In one exemplary embodiment, temporary CSC may be received from a mobile terminal. For example, the temporary CSC may be received from the mobile terminal that generated the temporary CSC. Advantageously, but not necessarily, the temporary CSC may be received from the mobile terminal that generated the temporary CSC during a card-based transaction.

The second data seed may be obtained or otherwise produced in various ways, as will be appreciated by those skilled in the art to which this patent application relates. For example, obtaining the second data seed (i.e., typically the same data seed that was used during the generation of the temporary CSC as described hereinabove) may be achieved by receiving or determining non-static parts of that data seed (e.g. a time stamp associated with a current (e.g., ongoing) card-based transaction) and/or receiving or retrieving from storage static parts of that data seed (e.g. a mobile terminal identifier, as an IMSI). In other words, it is possible to reproduce a same data seed as the data seed that was used during the generation of the temporary CSC.

As will be appreciated, in some embodiments the mobile terminal identifier (e.g.., IMSI) of the second data seed may be obtained by receiving the mobile terminal identifier from the mobile terminal (e.g., during a card-based transaction) that generated the temporary CSC. Alternatively, the mobile terminal identifier (e.g., IMSI) of the second data seed may be obtained by fetching the mobile terminal identifier from an internal or external storage. Furthermore, a time stamp of the second data seed (e.g., the time stamp associated with a current (possibly ongoing) card-based transaction) may be received from the mobile terminal that generated the temporary CSC. Alternatively, the time stamp of the second data seed may be determined or otherwise established by the server system.

In a second of its aspects, this disclosure concerns a computer program comprising instructions which, when executed on a processor, causes the processor to carry out the method according to the first aspect. A carrier comprising the computer program according to second aspect may also be provided. The carrier may be one of an electronic signal, an optical signal, a radio signal, or a computer readable storage medium.

In a third of its aspects, this disclosure concerns a server system having one or several computer servers. For example, the computer server system may comprise a communications interface; one or more processors; and a memory storing instructions, executable by the one or more processors, whereby the service provider server is operative to perform the method of the first aspect.

As will be appreciated, some embodiments described herein enable the regaining of an original CSC (e.g., associated with a card such as a credit card or debit card) from a temporary CSC, which is, as the name implies, valid only for a limited period of time. Here, the temporary CSC would be uniquely associated with the original, or normal, CSC. Compared to an original, or normal, CSC, the temporary CSC would be more difficult to obtain fraudulently. For example, if a purchase transaction occurs online, then generally the CSC from the back of the card is required as an added security measure to reduce fraud. Nevertheless, this CSC could e.g. be obtained fraudulently by an entity, process, or individual which/who is wrongly in possession of the card. By also adding the application of a minimal perfect hash function to the original, or normal, CSC as well as a data seed as discussed in SE1651165-1 and in PCT/SE2017/050858, it is made possible to generate a temporary CSC that is more difficult to obtain fraudulently. Since the temporary CSC is more difficult to obtain fraudulently, this temporary CSC may also be more secure to use in a subsequent card based transaction, such as a mobile or on-line purchase transaction.

As will further be appreciated, the embodiments described herein enable the regaining of the original CSC from the above-mentioned temporary CSC. By applying the same minimal perfect hash function to the obtained second data seed together with each CSC from a list of available CSCs stored at the service provider system until a match is found between an obtained temporary CSC and one CSC from the list of available CSCs, it is possible to regain the original CSC associated with the temporary CSC without performing unnecessarily complex or even impossible computations. In turn, this may allow for a relatively quick process for regaining the original CSC from a temporary CSC. This may also make the proposed method increasingly useful in practice.

### BRIEF DESCRIPTION OF DRAWINGS

These and other aspects, features and advantages will be apparent and elucidated from the following description of various embodiments, reference being made to the accompanying drawings, in which:
FIG. 1 schematically illustrates an example embodiment of a card such as a debit or credit card;
FIG. 2 schematically illustrates a rear side of the card shown in FIG. 1;
FIG. 3 is a flowchart illustrating method steps, or actions, in accordance with an embodiment of a method for generating a temporary CSC;
FIGs. 4A-4B schematically illustrate an example of a Minimal Perfect Hash (MPH) function;
FIGs. 5A-5C schematically illustrate an application of a MPH function to a CSC as well as a data seed, in accordance with example embodiments;
FIG. 6 is a flowchart illustrating method steps, or actions, in accordance with an embodiment of a method for regaining an original CSC from a temporary CSC;
FIG. 7A is a block diagram of a system where embodiments described herein could be reduced to practice;
FIG. 7B is a signaling diagram schematically illustrating actions performed in the system of FIG. 7A, in accordance with some embodiments;
FIG. 8 shows an example implementation of an embodiment of a server system such as a service provider system;
FIG. 9 illustrates a carrier comprising a computer program, in accordance with an embodiment.

### DETAILED DESCRIPTION

The present invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like reference numbers refer to like elements or method steps throughout this description.

As described earlier, some existing solutions for card-based transactions may still be inadequate. It is therefore a general object of the embodiments described herein to allow for a further development of card-based transactions that offer prevention, or at least complication, of unauthorized use of cards (e.g., credit or debit cards) by limiting access to accounts associated with said cards to unauthorized entities, processes and/or individuals.

SE1651165-1 and PCT/SE2017/050858 have proposed a method and a system for a card based transaction between a mobile terminal (e.g., a mobile telephone or a tablet computer) and a service provider system having one or several computer servers. For example, the mobile terminal may obtain a CSC from a card, such as a credit card or a debit card. Furthermore, the mobile terminal may obtain a data seed, which, in some embodiments, may include a time stamp and/or an identifier such as a mobile terminal identifier (e.g., an IMSI). Still further, the mobile terminal may apply a minimal perfect hash function to the CSC as well as the data seed to generate a temporary CSC. Also, the mobile terminal may initiate a card based transaction with the service provider system utilizing the thus generated temporary CSC. Moreover, the service provider system may obtain said temporary CSC (e.g., by receiving the generated temporary CSC from the mobile terminal). Still further, the service provider system may also apply the same minimal perfect hash function to the temporary CSC at its end until a match is found between the obtained temporary CSC and one CSC from a stored list of available CSCs. In response to a match having been found, the service provider system may also continue the initiated card based transaction with the mobile terminal.

To address the earlier-mentioned challenges, in accordance with an example embodiment, described herein are a method and a server system for regaining an original CSC from a temporary CSC, e.g. used in a card based transaction. The temporary CSC may have been generated by previously applying a minimal perfect hash function to an original CSC as well as a data seed in accordance with the teachings of SE1651165-1 (or, PCT/SE2017/050858), see also the Background section hereinabove. For example, a server system (e.g. a service provider system) having one or several computer servers, may obtain a temporary CSC, wherein the temporary CSC has been generated by previously applying a minimal perfect hash function to the CSC as well as a first data seed; obtaining a second data seed, the second data seed being a same data seed as the first data seed; and applying the same minimal perfect hash function to the obtained second data seed together with each one of several CSCs from a stored list of available CSCs until a match is found between the obtained temporary CSC and one CSC from the stored list of available CSCs.

In response to a match having been found, the service provider system may then also include continuing an initiated card based transaction.

As will be appreciated, the server system may obtain the earlier-mentioned temporary CSC (e.g., by receiving the generated temporary CSC from the mobile terminal) as well as the same data seed that was used in generation of the temporary CSC (e.g., by using the time stamp of the already initiated card-based transaction together with a stored mobile terminal identifier (e.g.an IMSI) to obtain or otherwise produce the second data seed, e.g. in a same or similar way that the mobile terminal would otherwise do it. Still further, the server system may also apply the same minimal perfect hash function to the same data seed together with each CSC from a stored list of available CSCs, until a match is found between the obtained temporary CSC and a CSC from that stored list of available CSCs, thus regaining the original CSC. In response to a match having been found, the service provider system may also continue the already initiated card based transaction with the mobile terminal, directly or after verifying the regained original CSC with e.g. the credit issuer.

Hereby it is made possible to regain an original CSC from a temporary CSC (which has been previously generated from said original CSC) without performing unnecessarily complex or even impossible computations. This may also allow for a relatively quick process of regaining the original CSC, making the technique increasingly useful in practice.

This would then enable the usage of a temporary CSC, which is valid only for a limited period of time, e.g. through the use of a data seed containing a timestamp when generating it. Here, the generated temporary CSC would be generally uniquely associated with the original, or normal, CSC. Compared to the original, or normal, CSC, the temporary CSC is thus comparatively more difficult to obtain fraudulently.

For example, if a purchase transaction occurs online, then generally the CSC from the back of the card is required as an added security measure to reduce fraud. Nevertheless, this CSC could e.g. be obtained fraudulently by an entity, process, or individual which/who is wrongly in possession of the card. By also adding the application of a minimal perfect hash function to the original, or normal, CSC as well as a data seed, it is made possible to generate a temporary CSC which is comparatively more difficult to obtain fraudulently. Since the temporary CSC is more difficult to obtain fraudulently, this temporary CSC may also be more secure to use in a subsequent card based transaction, such as a mobile or on-line purchase transaction.

Prior to describing the embodiments of the present disclosure in more detail and in order to give context to these embodiments, hash functions will be described briefly. A *hash function* is any function that can be used to map data of arbitrary size to data of fixed size. The values returned by a hash function are typically called hash values, hash codes, hash sums, or simply hashes. The earlier-mentioned "temporary CSC" could thus be seen as a hash value. One use is a data structure called a hash table, widely used in computer technology for rapid data lookup. Hash functions typically accelerate table or database lookup by detecting duplicated records in a large file. A hash function may allow one to easily verify that some input data maps to a given hash value, but if the input data is unknown, it is deliberately difficult to reconstruct it (or equivalent alternatives) by knowing the stored hash value. This may be used for assuring integrity of transmitted data. A *perfect hash function* for a set S is a hash function that maps distinct elements in S to a set of integers, with no collisions. A perfect hash function has many of the same applications as other hash functions, but with the advantage that no collision resolution has to be implemented. In mathematical terms, it is a total injective function. Furthermore, a perfect hash function is generally order preserving if the keys in the key set are arranged in some given order and the hash function typically preserves this order in the hash table. A perfect hash function for a specific set S that can be evaluated in constant time, and with values in a small range, can be found by a randomized algorithm in a number of operations that is proportional to the size of S. Any perfect hash functions suitable for use with a hash table typically use at least a number of bits that is proportional to the size of S. A perfect hash function with values in a limited range can be used for efficient lookup operations, by placing keys from S (or other associated values) in a table indexed by the output of the function. Using a perfect hash function is best in situations where there is a frequently queried large set, S, which is seldom updated. This is because any modification of the set leads to a non-perfect hash function. As is known among persons skilled in the art, a *minimal perfect hash function* is a perfect hash function that maps n keys to n consecutive integers, usually [0*..n-*1] or [1*..n*]*.* Or said differently: Let j and k be elements of some finite set K. F is a minimal perfect hash function if and only if F(*j*) =F(k) implies j=k (i.e., an injective function) and there exists an integer a such that the range of F is *a..a*+|**K**|-1. It has been proven that a general purpose minimal perfect hash scheme typically requires at least 1.44 bits/key. The best currently known minimal perfect hashing schemes appear to use around 2.6 bits/key.

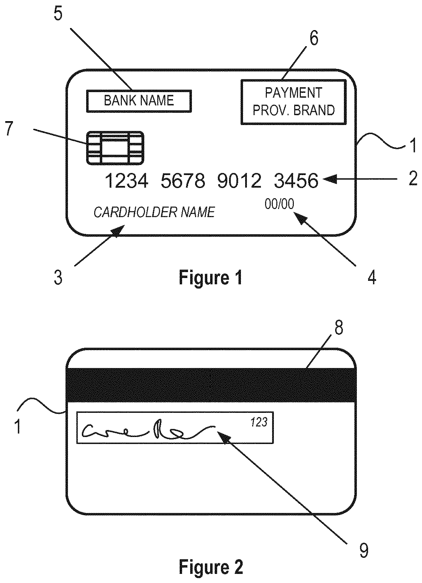

Referring now to FIG. 1, a card 1 such as a credit card or debit card that might be used with embodiments described herein will be described. The card 1 may be a plastic card having the size and shape of a conventional credit/debit card. Many conventional credit/debit cards are approximately 85.60 × 53.98 millimeters in size and are defined by the ISO / IEC 7810 standard as "ID-1". The card may be provided with raised card numbers 2, raised letters for a card holder name 3, raised numbers indicating the expiration date 4 (typically in the format MM/YY, where MM stands for month and YY stands for year). The card 1 also may include issuer information such as bank name 5, or bank logo. Typically, but not necessarily, the card 1 may also include information or a brand 6 of the payment provider, such as VISA, MASTERCARD or AMERICAN EXPRESS. Optionally, the card 1 may also include a chip 7 as is known and conventional in the existing art.

Reference is now made to FIG. 2, which schematically illustrates the back of card 1. As can be seen, the card 1 may include a magnetic stripe 8 encoded with information about the card as is known in the art. Furthermore, a signature block 9 may typically be provided. Note that in this example, the signature block 9 further includes a printed CSC, here exemplified by a 3-digit CVV2 code "123".

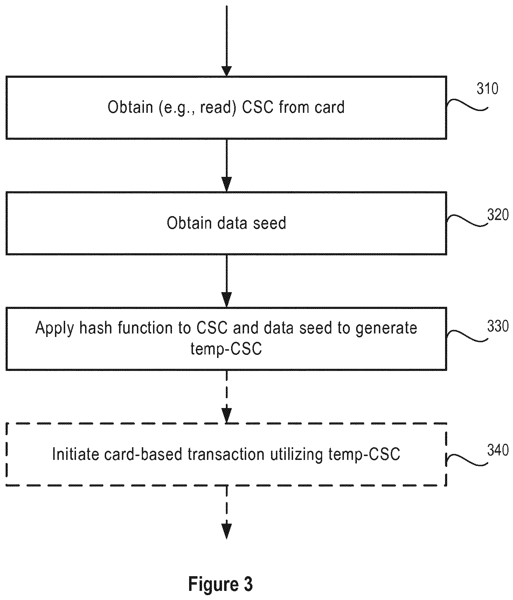

FIG. 3 is a flowchart that schematically illustrates a method of generating a temporary CSC (such as a CVV or CVV2) for use in a card based transaction in accordance with the teachings of SE1651165-1. The method may be performed by means of a mobile terminal, e.g. a mobile telephone.

Initially, the CSC is obtained 310 from the card 1. For example, this CSC may be obtained by reading the printed CSC from the card. In other words, the CSC may be obtained non-automatically, or manually, from the card 1. Alternatively, the CSC may be obtained automatically from the card 1. For example, in some embodiments the CSC may be optically read from the card 1.

Furthermore, a data seed is obtained 320. As will be appreciated, the data seed may include any one or a combination of the following attributes:
- a bank account number;
- an installation identifier (i.e., installation-ID);
- a mobile phone identifier such as an IMSI; and
- a time stamp.

In some embodiments, the data seed may comprise, or represent, an identifier which is common to a cardholder associated with the card 1 and a service provider system.

The data seed may be obtained 320 in different ways, e.g., depending on characteristics of the intended based transaction. For example, the data seed may be obtained in a way where the user (typically, but not necessarily, the cardholder) provides the data seed to the mobile terminal executing the method. Additionally, or alternatively, obtaining 320 the data seed may comprise receiving a signal including the data seed from the service provider system having one or several computer servers. For example, an installation-ID may be included in a signal received from the service provider system. Additionally, or alternatively, obtaining 320 the data seed comprises receiving a signal including the data seed from a card issuer system having one or several computer servers. For instance, a bank account number may be included in a signal received from the card issuer system. Additionally, or alternatively, obtaining 320 the data seed may comprise retrieving the data seed from a SIM associated with the mobile terminal. For example, an IMSI may be retrieved from said SIM.

With continued reference to FIG. 3, a minimal perfect hash function may be applied 330 to the CSC as well as the data seed to generate a temporary CSC.

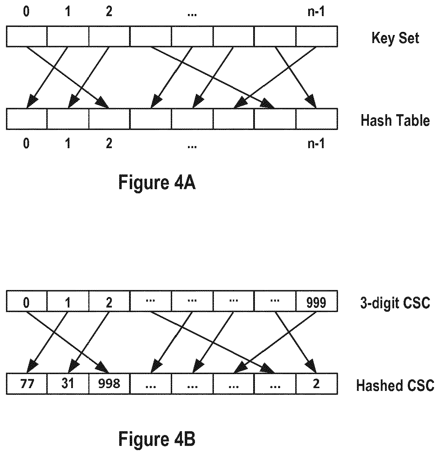

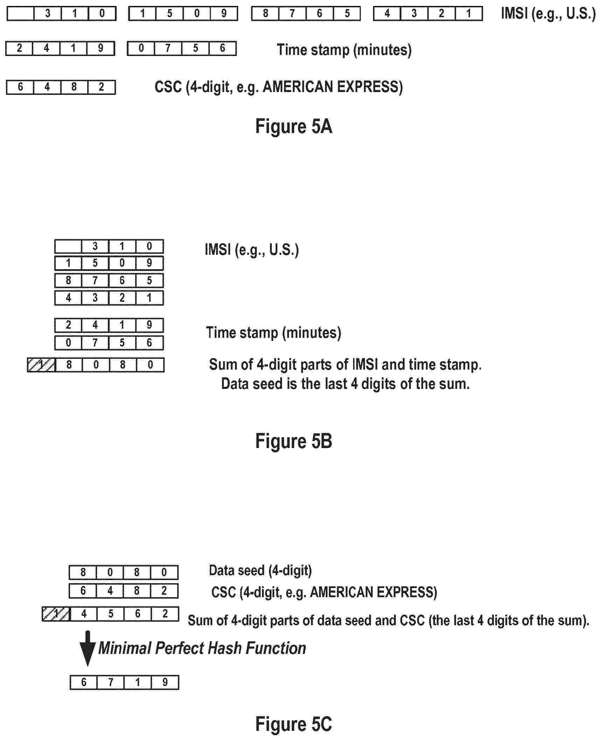

Turning now to FIGs. 4 and 5, an example of applying 330 a minimal perfect hash function to the CSC and the data seed will be described in more detail. FIG. 4A schematically illustrates an example minimal perfect hash function. Minimal perfect hash functions may avoid challenges of wasted space and time as is sometimes involved in other hash functions. Or said differently, each key in the key set has one and only one corresponding hashed key in the Hash Table. For example, assuming an application utilizing 3-digit CSC there will be 999 numbers in the Key Set and 999 corresponding numbers in the Hash Table. An example is given in FIG. 4B. In this example, there are 999 CSC's and 999 corresponding hashed CSC's. As can be seen, 0 renders 998, 1 renders 77, 2 renders 31, etcetera in this illustrative example.

The exact hash function, or hash algorithm, to be used in a certain implementation or application may be arbitrarily, or randomly, determined or chosen. More specifically, the exact hash function, or hash algorithm, to be used in a certain implementation may be arbitrarily determined or chosen as long as it fulfills the requirements of a preferably non-order preserving, minimal perfect hash function. As will be appreciated, the exact hash function, or hash algorithm, to be used should also be tested and evaluated in dependence of user needs and system requirements for the intended card based transactions.

Reference is now made to FIG 5, which illustrates an example of applying 330 a minimal perfect hash function to a combination of the CSC and the data seed in accordance with some embodiments. In this example, the CSC is a 4-digit number, e.g. as used by AMERICAN EXPRESS.

Also, in this example, the data seed comprises a combination of i) a mobile phone identifier, here exemplified by an IMSI; and ii) a time stamp. FIG. 5A illustrates the following:
- IMSI: 310 1509 8765 4321
- Time stamp: 2419 0756
- CSC: 6482.

As will be appreciated, the above-mentioned time stamp may be expressed in various ways. For example, it is possible to express the time using a time stamp as publicly available here: *http:*//*www.timestampconvert.com.* That is, the timestamp, may use a system for describing points in time, defined as the number of seconds elapsed since midnight Coordinated Universal Time (UTC) of January 1, 1970, not counting leap seconds. This way of expressing time is commonly used not only on Unix-like operating systems but also in many other computing systems.

As can be seen in FIG 5B, a data seed may be determined, or generated, from the IMSI and the time stamp. In this example, the data seed is generated as a total sum of the IMSI and the time stamp:

| | |
|---|---|
| | 0310 |
| | 1509 |
| | 8765 |
| | 4321 |
| | 2419 |
| + | 0756 |
| | 18080 |

As will be appreciated, the data seed corresponds to the last four digits of the total sum of the IMSI and the time stamp.

As will be appreciated, a minimal perfect hash function is also applied 330 to the CSC as well as the data seed to generate a temporary CSC. In some embodiments, as exemplified in FIG. 5C, it is possible to determine, or generate, a sum of the earlier-generated data seed and the CSC. Sometimes, this sum of the earlier-generated data seed and the CSC may be referred to as an intermediate key set.

In this example, a total sum of the earlier-generated data seed and the CSC may be produced:

| | |
|---|---|
| | 8080 |
| + | 6482 |
| | 14562 |

The last four digits of the total sum of the earlier-generated data seed and the CSC form the intermediate key set 4562. As can be seen in FIG. 5C, applying 330 a minimal perfect hash function to the intermediate key set 4562 in this example may render, or generate, a temporary CSC 6719. The temporary CSC is sometimes denoted temp-CSC.

Again, it is worth mentioning that the exact hash function, or hash algorithm, to be used in action 330 in a certain implementation may be arbitrarily, or randomly, determined or chosen. More specifically, the exact hash function, or hash algorithm, to be used in a certain implementation may be arbitrarily determined or chosen as long as it fulfills the requirements of a preferably non-order preserving, minimal perfect hash function. As will be appreciated, the exact hash function, or hash algorithm, to be used should also be tested and evaluated in dependence of user needs and system requirements for the intended card based transactions.

For example, the following webpage *http:*//*cmph.sourceforge.net*/ presents various publicly available hash functions that may be used in dependence of, for instance, user needs and system requirements (e.g., central processing unit (CPU) capacity and memory requirements).

In some implementations, applications, or scenarios, it has turned out that the CHD function (abbreviation for Compress, Hash and Displace) may be advantageous. The CHD function is described in detail in the paper "Hash, displace, and compress" by Djamal Belazzougui, Fabiano C. Botelho, and Martin Dietzfelbinger, which can be downloaded here: *http:*//*cmph.sourceforge.net*/*papers*/*esa09.pdf.*

Alternatively, it has turned out that BDZ or BMZ functions described at the webpage *http:*//*cmph.sourceforge.net*/*may* be suitable to apply.

With continued reference to FIG. 3, a card based transaction may optionally also be initiated utilizing the generated temporary CSC. For example, the card based transaction may be initiated between the mobile terminal performing the method steps, or actions, 310-330 and a service provider system.

In alternative embodiments, method steps (or, actions) 310-330 and method step (or, action) 340 are performed, or otherwise executed, by different devices in a distributed manner. For instance, the temporary CSC may initially be generated by a first device and the card-based transaction may be subsequently initiated by a second (i.e. different) device. In one example embodiment, the first device may e.g. be a temporary CSC generation device which is specifically designed for generating the temporary CSC. Once known, the temporary CSC generated by the first device may be utilized by a second device when initiating a card based transaction.

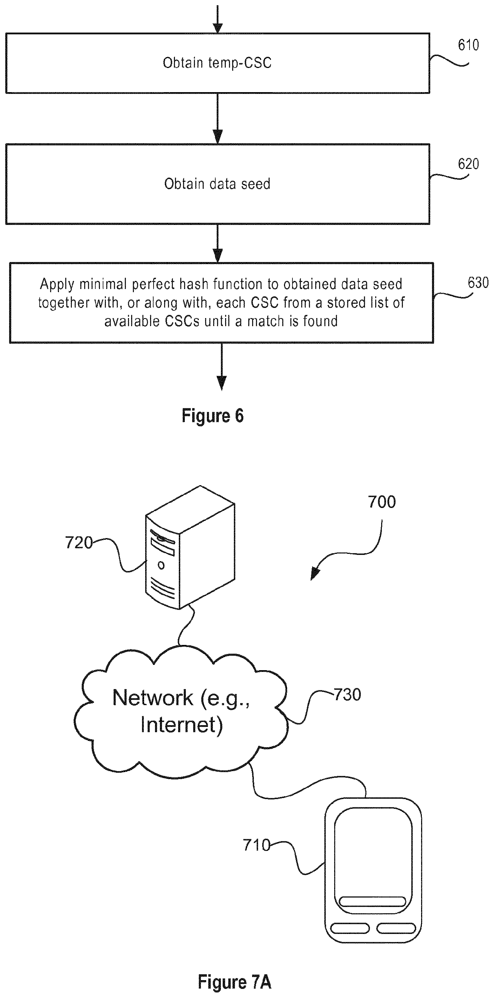

Reference is now made to FIG. 6, which is a flowchart that schematically illustrates an example embodiment of a method for regaining an original CSC from a temporary CSC (such as a CVV or CVV2) used in a card based transaction. In the example embodiment detailed in FIG. 6, the method is performed by means of a server system. As will be appreciated, the server system may comprise one single computer server or several computer servers. The server system may e.g. be a service provider system (i.e. a server system hosted by a service provider) including one or several computer servers. In alternative embodiments, the server system may e.g. instead be a credit issuer system (i.e. a server system hosted by a credit issuer) including one or several computer servers.

A temporary CSC is obtained 610. As described earlier with respect to FIG 3, the temporary CSC has been generated by previously applying a minimal perfect hash function to a CSC as well as a first data seed, e.g. in accordance with the teachings in SE1651165-1 (or, PCT/SE2017/050858). For example, the temporary CSC may be obtained 610 by receiving the temporary CSC from a device, e.g. a mobile terminal that has initiated a card based transaction with the service provider system.

Then, a second data seed is obtained 620. The second data seed is the same data seed as the first data seed. That is, the second data seed is typically the same data seed as used in generating the temporary CSC.

This action 620 would advantageously include having at least part of the second data seed stored (e.g. in a storage such as a memory) in advance at the server system 720. For example, this could advantageously include having at least part of the second data seed stored in advance at the server system 720, for security reasons preferably at least one proprietary part from the generating side that is known in advance by the service provider system 720, e.g. a mobile terminal identifier (as IMSI), a bank account number and/or an installation identifier acquired during a possible application setup at the side that generates the temporary CSC (i.e., the mobile terminal in this example). Other static (non-changing) parts of the second data seed may either be stored in advance at the server system 720 or be communicated, e.g. during the initiation of a card based transaction. If the second data seed comprises a time stamp or other parts that change, e.g. a sequence number, this could either be calculated by means of the server system 720 or be communicated, e.g. during the initiation of a card based transaction. For example, as foreshadowed in FIG. 5B, an IMSI may be stored by the server system 720, while the time stamp may be sent from the generating side (i.e., the mobile terminal 710 in this example) as part of or in connection with a card based transaction; these two parts would then be combined to produce or otherwise form the second data seed, as appreciated by FIG. 5B and further described below.

Furthermore, a same minimal perfect hash function is applied 630 to the obtained or otherwise formed second data seed and each CSC from a stored list of available CSCs until a match is found between the obtained temporary CSC and one CSC from a stored list of available CSCs. That is, the server system applies the same minimal perfect hash function as was previously used to generate the temporary CSC, in generally the same or in a generally similar way. If the generation of the temporary CSC involved running the action 330 (see Fig. 3) more than once, the same number of repetitions should advantageously also take place during the regaining procedure at the server system side described in connection with Fig. 6.

The minimal perfect hash function to be used by the server system 720 (i.e., the same minimal perfect function) may for example be determined, e.g. stored, in advance at the server system 720. In other words, the minimal perfect hash function to be used may be known in advance by the server system 720. Alternatively, information related to the minimal perfect hash function to be used may be communicated, e.g. during the initiation of a card based transaction. To this end, if the generation of the temporary CSC involved running the action 330 (see Fig. 3) more than once as mentioned above it should also be appreciated that the number of times that the minimal perfect hash function is to be executed by the server system 720 (i.e., generally the same number as during the generation of the temporary CSC) may for example be determined, e.g. stored, in advance at the server system 720. In other words, the number of times that the minimal perfect hash function is to be run may be known in advance by the server system 720. Alternatively, information related to the number of times that the minimal perfect hash function is to be run may be communicated, e.g. during the initiation of a card based transaction.

In some embodiments, parts of the above information, e.g. the hash algorithm to utilize, the number of times to run it as well as certain parts of the data seed, as a sequence number, may originate from the server system 720 and will thus be communicated to the CSC generating side 330 (i.e. the mobile terminal 710 in this example), e.g. during the initiation of a card based transaction.

Reference has been made to FIG. 5 earlier hereinabove, which illustrates an example of applying 330 a minimal perfect hash function to a combination of a CSC value and the data seed in accordance with some embodiments. In this example, the CSC is a 4-digit number, e.g. as used by AMERICAN EXPRESS. Reference is now made to Fig. 5 again.

The second data seed may comprise a combination of i) a mobile terminal identifier such as a mobile phone identifier, here exemplified by an IMSI; and ii) a time stamp. FIG. 5A for instance illustrates the following:
- IMSI: 310 1509 8765 4321
- Time stamp: 2419 0756
- CSC value: 6482.

As will be appreciated and as described earlier, the above-mentioned time stamp may be expressed in various ways. For example, it is possible to express the time using a time stamp as publicly available here: *http:*//*www.timestampconvert.com.* That is, the timestamp may use a system for describing points in time, defined as the number of seconds elapsed since midnight Coordinated Universal Time (UTC) of January 1, 1970, not counting leap seconds. This way of expressing time is commonly used not only on Unix-like operating systems but also in many other computing systems.

As can be seen in FIG. 5B, a second data seed may be determined, or generated, from the IMSI and the time stamp. In this example, the second data seed is generated as a total sum of the IMSI and the time stamp:
0310
1509
8765
4321

| | |
|---|---|
| | 2419 |
| + | 0756 |
| | 18080 |

As will be appreciated, the second data seed corresponds to the last four digits of the total sum of the IMSI and the time stamp.

As will further be appreciated, a same minimal perfect hash function is then applied 630 (see Fig. 6) to the second data seed together with each CSC from a list of available CSCs to generate a result to compare to the temporary CSC that has been obtained 610; when these two (i.e. the result and the temporary CSC) are equal, the original CSC that was used to produce the temporary CSC will be equal to the CSC from the list of available CSCs that was just used to produce the result that corresponded to the temporary CSC. Thus, the original CSC is regained.

In some embodiments, as exemplified in FIG. 5C, it is possible to determine, or generate, a sum of the earlier-generated data seed and the CSC. Sometimes, this sum of the earlier-generated data seed and the CSC may be referred to as an intermediate key set.

In this example, a total sum of the earlier-generated data seed and the CSC may be produced:

| | |
|---|---|
| | 8080 |
| + | 6482 |
| | 14562 |

The last four digits of the total sum of the earlier-generated data seed and the CSC form the intermediate key set 4562. As can be seen in FIG. 5C, applying 630 a minimal perfect hash function to the intermediate key set 4562 in this example may render, or generate, a result 6719, which would then be compared with the temporary CSC, sometimes denoted temp-CSC, produced in 330.

Thus, as the result 6719 here is the same as that temporary CSC, the original CSC would also be the same, i.e. 6482.

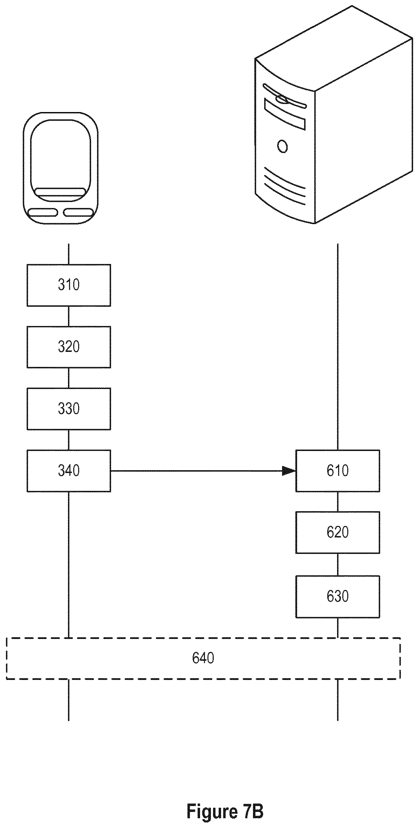

FIG. 7A schematically illustrates a possible environment, wherein embodiments described hitherto may be applied. In this example scenario, the environment 700 comprises a mobile terminal 710, such as a mobile telephone, as an example of a device that is capable of generating a temporary CSC, and a server system here exemplified as a service provider system 720, which is to regain an original CSC from said temporary CSC. FIG. 7B is a signaling diagram illustrating various actions that may be performed as well as signaling between the mobile terminal 710 and the service provider system 720 shown in FIG. 7A.

The mobile terminal 710 may be connected through a network or other connection 730, in one example via the internet. The mobile terminal 710 may be connected through a wired connection or a wireless connection or any combination of known connection methods for example through dedicated networks or connections. It should be noted that any terminal may be connected to the network 730 and the number and type of terminals 100 in FIG. 7A should not be construed as limiting.

The system 700 exemplified here comprises at least one server 720. In FIG. 7A only one server 720 is shown, but it should be noted that any number of servers 720 may be implemented in a computer network. Generally a server is a physical computer (a hardware system) dedicated to running one or more services (as a host), to serve the needs of users of other computers or terminals 710 on the network 730. In one embodiment the server 720 is a service provider server. Generally, a service provider server 720 may refer to either hardware (a computer) or software (a computer application) that helps to deliver content that can be accessed through a mutual communication network, such as the Internet 730.

FIG. 7B shows example actions and example messages that may signaled, according to FIG. 7A, between a mobile terminal 710 and a service provider system 720 to perform a card-based transaction. In this example, the mobile terminal, here exemplified as a mobile telephone, obtains 310 a CSC such as a CVV or a CVV2 from a card, such as a credit card or a debit card. The mobile terminal further obtains 320 a data seed, e.g. including a mobile terminal identifier and a time stamp. Still further, the mobile terminal applies 330 a minimal perfect hash function to the CSC as well as the data seed to generate a temporary CSC (e.g., in accordance with the teachings in SE1651165-1 (or, PCT/SE2017/050858). In this example, the mobile terminal also initiates 340, or otherwise triggers, a card based transaction with and the service provider system 720 utilizing, or otherwise using, the generated temporary CSC. The service provider system 720 obtains 610 said temporary CSC. For example, the service provider system 720 may receive the temporary CSC from the mobile terminal. In response to obtaining 610 the temporary CSC, the service provider server 720 may also obtain 620 a same data seed that was used during the generation of the temporary CSC and further apply 630 the same minimal perfect hash function to the thus obtained data seed together with, or along with, each one of several CSCs from a stored list of available CSCs until a match is found between the obtained temporary CSC and one CSC from the stored list of available CSCs. Thus, the service provider service is capable of regaining the original CSC from the obtained temporary CSC. An initiated card-based transaction between the mobile terminal 710 and a service provider system 720 may thereafter be continued 640.

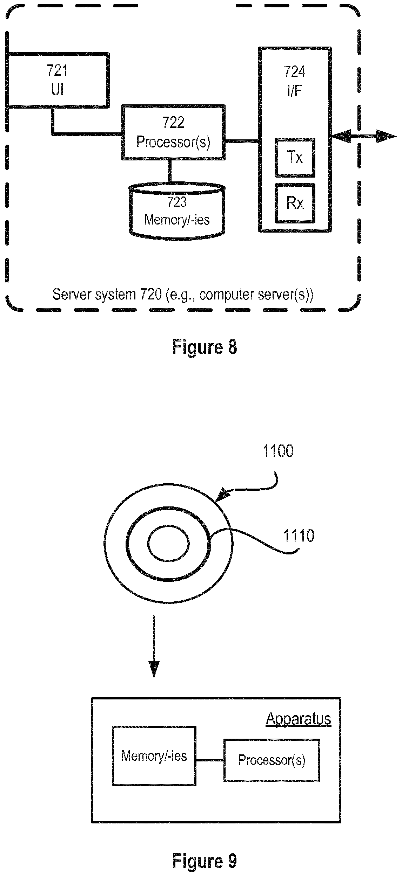

Reference is now made to Fig. 8 which schematically illustrates an example implementation of an embodiment of a server system here exemplified by a service provider system 720 (see, e.g., also FIGs 7A-7B). The service provider system 720 may, for example, be a computer server hosted by a service provider as described earlier. The service provider system 720 may be configured to perform, or otherwise execute, the method in accordance with any one of the embodiments described herein, e.g. FIG. 6 or FIG. 7.

To this end, the service provider system 720 may optionally comprise a UI 721. Furthermore, the service provider system 720 comprises hardware resources. For example, the service provider system 720 may comprise one or more processors 722 and one or more memories 723. Also, a communications interface 724, or a communications circuitry, may be provided in order to allow the service provider system 720 to communicate with other devices such as a mobile terminal 710.

To this end, the communications interface 724 may comprise a transmitter (Tx) and a receiver (Rx). Alternatively, the communications interface 724 may comprise a transceiver (Tx/Rx) combining both transmission and reception capabilities. The communications interface 724 may include a radio frequency (RF) interface allowing the service provider system 720 to communicate with other computer servers and/or devices such as the mobile terminal 710 through a radio frequency band through the use of different radio frequency technologies such as 5G NR (5G New Radio), LTE (Long Term Evolution), WCDMA (Wideband Code Division Multiple Access), any other cellular network standardized by the 3rd Generation Partnership Project (3GPP), or any other wireless technology such as Wi-Fi, Bluetooth^{®}, etcetera.

As will be appreciated, the service provider system 720 may hence comprise a communications interface 724, one or more processors 722 and memory 723 storing instructions, executable by the one or more processors, whereby the service provider server 720 is operative to obtain a temporary CSC, wherein the temporary CSC has been generated by previously applying a minimal perfect hash function to the CSC as well as a data seed; obtain a second data seed, the second data seed being a same data seed as the first data seed; and apply a same minimal perfect hash function to the obtained second data seed together with each one of several CSCs from a stored list of available CSCs until a match is found between the obtained temporary CSC and one CSC from the stored list of available CSCs, thereby regaining the original CSC.

Turning now to Fig. 9, another embodiment will be briefly discussed. Fig. 9 shows an example of a computer-readable medium, in this example in the form of a data disc 900.

In one embodiment the data disc 900 is a magnetic data storage disc. The data disc 900 is configured to carry instructions 910 that can be loaded into a memory of an apparatus, e.g. a service provider system 720 including one or several computer servers. Upon execution of said instructions by a processor of the apparatus, the apparatus is caused to execute a method or procedure according to any one of the embodiments described herein, e.g. in conjunction with Figs. 6 and 7. The data disc 900 is arranged to be connected to or within and read by a reading device (not shown), for loading the instructions into the processor. One such example of a reading device in combination with one (or several) data disc(s) 900 is a hard drive.

It should be noted that the computer-readable medium can also be other mediums such as compact discs, flash memories or other memory technologies commonly used. In such an embodiment the data disc 900 is one type of a tangible computer-readable medium. The instructions may alternatively be downloaded to a computer data reading device, such as an apparatus capable of reading computer coded data on a computer-readable medium, by comprising the instructions in a computer-readable signal (not shown) which is transmitted via a wireless (or wired) interface (for example via the Internet) to the computer data reading device for loading the instructions into a processor of the apparatus. In such an embodiment, the computer-readable signal is one type of a non-tangible computer-readable medium.

In the detailed description hereinabove, for purposes of explanation and not limitation, specific details are set forth in order to provide a thorough understanding of various embodiments described in this disclosure. In some instances, detailed descriptions of well-known devices, components, circuits, and methods have been omitted so as not to obscure the description of the embodiments disclosed herein with unnecessary detail.

All statements herein reciting principles, aspects, and embodiments disclosed herein, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure. Thus, for example, it will be appreciated that block diagrams herein can represent conceptual views of illustrative circuitry or other functional units embodying the principles of the described embodiments. Similarly, it will be appreciated that any flow charts and the like represent various processes which may be substantially represented in computer readable medium and so executed by a computer or processor, whether or not such computer or processor is explicitly shown.

The functions of the various elements including functional blocks, may be provided through the use of hardware such as circuit hardware and/or hardware capable of executing software in the form of coded instructions stored on the above-mentioned computer readable medium. Thus, such functions and illustrated functional blocks are to be understood as being either hardware-implemented and/or computer-implemented, and thus machine-implemented. In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and/or field programmable gate array(s) (FPGA(s)), and (where appropriate) state machines capable of performing such functions.

In terms of computer implementation, a computer is generally understood to comprise one or more processors or one or more controllers. When provided by a computer or processor or controller, the functions may be provided by a single dedicated computer or processor or controller, by a single shared computer or processor or controller, or by a plurality of individual computers or processors or controllers, some of which may be shared or distributed.

Moreover, use of the term "processor" or "controller" may also be construed to refer to other hardware capable of performing such functions and/or executing software, such as the example hardware recited above.

Modifications and other variants of the described embodiments will come to mind to one skilled in the art having benefit of the teachings presented in the foregoing description and associated drawings.

For example, while the embodiments described herein have been exemplified to apply, or make use of, minimal perfect hash functions persons that are skilled in the art will appreciate that it is not necessary to apply, or make use of, minimal perfect hash functions. It will be envisaged that, in some applications or scenarios, other hash functions may alternatively be applied.

## Claims

1. A method of regaining an original Card Security Code, CSC, from a temporary CSC used in a card based transaction, wherein the method is performed by a server system having one or several computer servers and the method comprising:
obtaining (610) a temporary CSC, wherein the temporary CSC has been generated by previously applying a minimal perfect hash function to an original CSC as well as a first data seed, the first data seed including a mobile terminal identifier of a mobile terminal and a time stamp generated by said mobile terminal; and
obtaining (620) a second data seed, the second data seed being a same data seed as the first data seed and including the same mobile terminal identifier and the same time stamp as the first data seed, wherein at least said mobile terminal identifier has been stored in advance at the server system such that obtaining (620) the second data seed comprises obtaining the mobile terminal identifier locally from the server system;
applying (630) a same minimal perfect hash function to the obtained second data seed together with each one of several CSCs from a stored list of available CSCs until a match is found between the obtained temporary CSC and one CSC from the stored list of available CSCs; and in response to a match having been found:
continuing (640) an initiated card based transaction

2. The method according to claim 1, wherein the time stamp has been communicated during the initiation of the card based transaction such that obtaining (620) the second data seed involves receiving the time stamp from the mobile terminal generating the time stamp.

3. The method according to claim 1 or 2, wherein the method is performed by any one or a combination of i) a service provider system having one or several computer servers and ii) a credit issuer system having one or several computer servers.

4. A computer program comprising instructions (1110) which, when executed on a processor, causes the processor to carry out the method according to any one of the claims 1 - 3.

5. A carrier comprising the computer program according to claim 4, wherein the carrier is one of an electronic signal, an optical signal, a radio signal, or a computer readable storage medium (1100).

6. A server system (720) having one or several computer servers, comprising:
a communications interface (724);
one or more processors (722); and
a memory (723) storing instructions, executable by the one or more processors, whereby the service provider server is operative to perform the method according to any one of the claims 1 - 5.

## Patentansprüche

1. Verfahren zum Wiedererlangen eines ursprünglichen Kartensicherheitscodes, CSC, aus einem temporären CSC, der in einer kartenbasierten Transaktion verwendet wird, wobei das Verfahren von einem Serversystem mit einem oder mehreren Computerservern ausgeführt wird und das Verfahren Folgendes aufweist:
Erhalten (610) eines temporären CSC, wobei der temporäre CSC durch vorheriges Anlegen einer minimalen perfekten Hash-Funktion an einen ursprünglichen CSC sowie einen ersten Datensatz oder Seed-Daten erzeugt wurde, wobei der erste Datensatz einen Mobilterminal-Identifikator eines Mobilterminals und einen von dem Mobilterminal erzeugten Zeitstempel aufweist; und
Erhalten (620) eines zweiten Datensatzes, wobei der zweite Datensatz derselbe Datensatz wie der erste Datensatz ist und denselben Mobilterminal-Identifikator und denselben Zeitstempel wie der erste Datensatz enthält, wobei zumindest der Mobilterminal-Identifikator im Voraus im Serversystem gespeichert wurde, so dass das Erhalten (620) des zweiten Datensatzes das lokale Erhalten des Mobilterminal-Identifizierers vom Serversystem aufweist;
Anlegen (630) einer gleichen minimalen perfekten Hash-Funktion an den erhaltenen zweiten Datensatz zusammen mit jedem von mehreren CSCs aus einer gespeicherten Liste verfügbarer CSCs, bis eine Übereinstimmung zwischen dem erhaltenen temporären CSC und einem CSC aus der gespeicherten Liste verfügbarer CSCs gefunden wird; und ansprechend darauf, dass eine Übereinstimmung gefunden wurde:
Fortsetzen (640) einer eingeleiteten kartenbasierten Transaktion

2. Verfahren gemäß Anspruch 1, wobei der Zeitstempel während der Einleitung der kartenbasierten Transaktion übermittelt wurde, so dass das Erhalten (620) des zweiten Datensatzes das Empfangen des Zeitstempels von dem mobilen Endgerät aufweist, das den Zeitstempel erzeugt.

3. Verfahren nach Anspruch 1 oder 2, wobei das Verfahren durchgeführt wird durch i) ein Dienstanbietersystem mit einem oder mehreren Computerservern und/oder ii) ein Kreditausgebersystem mit einem oder mehreren Computerservern.

4. Computerprogramm mit Anweisungen (1110), die bei Ausführung auf einem Prozessor bewirken, dass der Prozessor das Verfahren gemäß einem der Ansprüche 1 bis 3 ausführt.

5. Träger mit dem Computerprogramm gemäß Anspruch 4, wobei der Träger eines der folgenden ist ein elektronisches Signal, ein optisches Signal, ein Funksignal oder ein computerlesbares Speichermedium (1100).

6. Ein Serversystem (720) mit einem oder mehreren Computerservern, aufweisend:
eine Kommunikationsschnittstelle (724);
einen oder mehrere Prozessoren (722); und
einen Speicher (723), der Anweisungen speichert, die von dem einen oder den mehreren Prozessoren ausführbar sind, wobei der Dienstanbieter-Server betriebsmäßig geeignet ist, das Verfahren gemäß einem der Ansprüche 1 bis 5 auszuführen.

## Revendications

1. Procédé de récupération d'un code de sécurité de carte, CSC, d'origine à partir d'un CSC temporaire utilisé dans une transaction basée sur une carte, dans lequel le procédé est réalisé par un système de serveurs ayant un ou plusieurs serveurs informatiques et le procédé comprenant :
l'obtention (610) d'un CSC temporaire, dans lequel le CSC temporaire a été généré en appliquant au préalable une fonction de hachage parfait minimale sur un CSC d'origine ainsi que sur un premier germe de données, le premier germe de données comportant un identifiant de terminal mobile d'un terminal mobile et un horodatage généré par ledit terminal mobile ; et
l'obtention (620) d'un deuxième germe de données, le deuxième germe de données étant un même germe de données que le premier germe de données et comportant le même identifiant de terminal mobile et le même horodatage que le premier germe de données, dans lequel au moins ledit identifiant de terminal mobile a été stocké à l'avance au niveau du système de serveurs de sorte que l'obtention (620) du deuxième germe de données comprenne l'obtention de l'identifiant de terminal mobile localement à partir du système de serveurs ;
l'application (630) d'une même fonction de hachage parfait minimale sur le deuxième germe de données obtenu conjointement avec chacun de plusieurs CSC provenant d'une liste stockée de CSC disponibles jusqu'à ce qu'une correspondance soit trouvée entre le CSC temporaire obtenu et un CSC provenant de la liste stockée de CSC disponibles ; et en réponse à une correspondance ayant été trouvée :
la poursuite (640) d'une transaction basée sur une carte initiée.

2. Procédé selon la revendication 1, dans lequel l'horodatage a été communiqué pendant l'initiation de la transaction basée sur une carte de sorte que l'obtention (620) du deuxième germe de données implique la réception de l'horodatage à partir du terminal mobile générant l'horodatage.

3. Procédé selon la revendication 1 ou 2, dans lequel le procédé est réalisé par l'un quelconque ou une combinaison de i) un système de fournisseur de service ayant un ou plusieurs serveurs informatiques et ii) un système d'émetteur de crédit ayant un ou plusieurs serveurs informatiques.

4. Programme d'ordinateur comprenant des instructions (1110) qui, lorsqu'elles sont exécutées sur un processeur, amènent le processeur à mener à bien le procédé selon l'une quelconque des revendications 1 à 3.

5. Support comprenant le programme d'ordinateur selon la revendication 4, dans lequel le support est un parmi un signal électronique, un signal optique, un signal radio ou un support de stockage lisible par ordinateur (1100).

6. Système de serveurs (720) ayant un ou plusieurs serveurs informatiques, comprenant :
une interface de communications (724) ;
un processeur (722) ou plus ; et
une mémoire (723) stockant des instructions, exécutables par le processeur ou plus, moyennant quoi le serveur de fournisseur de service est fonctionnel pour réaliser le procédé selon l'une quelconque des revendications 1 à 5.
